# EUROPÄISCHE PATENTSCHRIFT

(11) **EP 1 455 077 B1**
(45) Veröffentlichungstag und Bekanntmachung des Hinweises auf die Patenterteilung: **14.12.2011**
(21) Anmeldenummer: 04005172.4
(22) Anmeldetag: 04.03.2004
(51) Int. Cl.: F02M 21/02

(54) **Verfahren zum Betreiben einer Kraftstoffanlage für einen LPG-Motor**
Method for operating a fuel system for a LPG engine
Procédé d'exploitation d'un système d'alimentation de carburant pour un moteur GPL

(30) Priorität: 07.03.2003 DE 10310151
(43) Veröffentlichungstag der Anmeldung: 08.09.2004
(73) Patentinhaber: STILL GmbH, 22113 Hamburg (DE); Volkswagen AG, 38436 Wolfsburg (DE)
(72) Erfinder: Firsching, Andreas, 63739 Aschaffenburg (DE); Kistner, Andreas, 63607 Wächtersbach (DE); Mey, Jörn, 23879 Mölln (DE); Seydell, Joachim, 38518 Gifhorn (DE); Wucherpfenning, Frank, 38302 Wolfenbüttel (DE)
(74) Vertreter: Geirhos, Johann

(56) Entgegenhaltungen:
- WO-A1-98/10186
- DE-A1- 3 924 776
- FR-A1- 2 764 002
- US-A- 6 026 789

## Beschreibung

Die Erfindung betrifft ein Verfahren zum Betreiben einer Kraftstoffanlage für einen mit Treibgas betriebenen Verbrennungsmotor, wobei die Kraftstoffanlage mindestens ein elektrisch ansteuerbares Absperrventil und mindestens eine elektrisch betreibbare Heizvorrichtung für das Treibgas aufweist.

Mit Treibgas angetriebene Verbrennungsmotoren werden häufig in Flurförderzeugen wie z.B. Gabelstaplem, aber auch in Personenkraftwagen eingesetzt. Das für diese Anwendung gebräuchliche Treibgas wird häufig auch als Flüssiggas oder als LPG (liquid petroleum gas) bezeichnet und besteht in der Hauptsache aus Propan und/oder Butan.

Die Kraftstoffanlage eines solchen Verbrennungsmotors umfasst einen als Druckgasflasche oder als Drucktank ausgeführten Kraftstoffbehälter, einen Verdampfer und ein dem Verdampfer vorgeschaltetes Absperrventil. In dem Verdampfer wird das in flüssigem Zustand gespeicherte Treibgas in einen gasförmigen Zustand entspannt, wobei dem Treibgas Wärmeenergie zugeführt wird. Nach längerem Betrieb des Verbrennungsmotors geschieht dies in der Regel mittels der Kühlflüssigkeit des Verbrennungsmotors. Um auch während eines Kaltstarts des Verbrennungsmotors ein zumindest annähemd vollständiges Verdampfen des Treibgases sicherzustellen, weist die Kraftstoffanlage zusätzlich mindestens ein elektrisches Heizelement auf. Der Verdampfer kann auch die Funktion eines Druckreglers beinhalten, so dass das Treibgas am Ausgang des Verdampfers in gasförmigem Zustand mit einem definierten Druck zur Verfügung steht. Weiterer, dem Verdampfer nachgeschalteter Bestandteil der Kraftstoffanlage ist entweder ein Mischer, der bezüglich seiner Funktion einem Vergaser eines Benzinmotors entspricht, oder eine Einspritzanlage. Ein solcher Motor wird im WO 98/10186 offenbart.

Der Erfindung liegt die Aufgabe zugrunde, ein Verfahren zum Betreiben einer Kraftstoffanlage zur Verfügung zu stellen, das in jeder Betriebssituation ein Ansammeln von kritischen Mengen flüssigen Treibgases hinter dem Verdampfer sicher verhindert.

Diese Aufgabe wird erfindungsgemäß durch die folgenden Verfahrensschritte gelöst: Bei einem Einschalten des Verbrennungsmotors wird ein Signal zum Einschalten der Heizvorrichtung erzeugt; bei dem Einschalten der Heizvorrichtung wird zumindest einmalig ein Heizbedarf der Kraftstoffanlage ermittelt; in Abhängigkeit von dem Heizbedarf der Kraftstoffanlage wird eine Verzögerungszeit ermittelt, nach der das Absperrventil nach dem Einschalten der Heizvorrichtung geöffnet wird. Das Einschalten des Verbrennungsmotors wird durch eine Bedienperson ausgelöst, beispielsweise durch Drehen eines Zündschlüssels oder durch Drücken eines Startknopfes. Nach diesem Einschalten wird der Verbrennungsmotor mit dem erfindungsgemäßen, automatisch ablaufenden Verfahren gestartet. Dabei wird zunächst die elektrische Heizvorrichtung der Kraftstoffanlage eingeschaltet. Mit dieser kann beispielsweise ein Verdampfer und eine Einspritzsammelleitung der Kraftstoffanlage vorgeheizt werden. Gleichzeitig wird anhand von bestimmten Parametem der Heizbedarf der Kraftstoffanlage ermittelt, der insbesondere in Abhängigkeit davon, ob ein Kaltstart oder ein Warmstart des Verbrennungsmotors vorliegt, stark variieren kann. In Abhängigkeit von dem ermittelten Heizbedarf wird eine Verzögerungszeit bestimmt, nach deren Ablauf die Kraftstoffzufuhr durch Öffnen des Absperrventils beginnt. Die Verzögerungszeit entspricht damit einer Vorheizzeit der Kraftstoffanlage.

Der Heizbedarf der Kraftstoffanlage wird in Abhängigkeit von einem gemessenen Temperaturwert des Verbrennungsmotors und/oder in Abhängigkeit von einem gemessenen von dem Verbrennungsmotor unabhängigen Temperaturwert und/oder in Abhängigkeit von dem die Heizvorrichtung durchfließenden Strom ermittelt. Als Temperaturwert des Verbrennungsmotors kommt beispielsweise dessen Kühlwassertemperatur in Frage. Als von dem Verbrennungsmotor unabhängiger Temperaturwert kann beispielsweise die Temperatur einer Hydraulikanlage des Fahrzeugs herangezogen werden, wenn Kraftstoffanlage und Verbrennungsmotor Teil einer ein hydraulisches Aggregat aufweisenden Arbeitsmaschine sind. Anhand dieser beiden gemessenen Temperaturwerte lassen sich der Betriebszustand des Verbrennungsmotors und der Kraftstoffanlage, deren Temperaturniveau und das Temperatumiveau der Umgebung eindeutig abschätzen, wobei auf ohnehin vorhandene Temperatursensoren zurückgegriffen werden kann. Möglich wäre es jedoch auch, mindestens einen zusätzlichen Temperatursensor vorzusehen. Eine weitere Eingangsgröße zur Ermittlung des Heizbedarfs kann der die Heizvorrichtung durchfließende Strom sein, der von der Batteriespannung, aber auch von der Temperatur der Heizvorrichtung selbst abhängt. Dies ist insbesondere dann der Fall, wenn die Heizvorrichtung PTC-Heizelemente aufweist, deren innerer Widerstand sich bei steigender Temperatur erhöht. Das Prüfen des die Heizvorrichtung durchfließenden Stroms kann der Sicherheitsplausibilisierung dienen. Alternativ kann hierfür auch das Signal eines Temperatursensors herangezogen werden.

Das Abschalten der elektrischen Heizvorrichtung erfolgt ebenfalls automatisch. Dabei wird bei Überschreiten einer vorgegebenen Grenze für die aktuelle Temperatur der Kraftstoffanlage, der aus dem Heizbedarf der Kraftstoffanlage ermittelt wird, und/oder bei Unterschreiten einer vorgegebenen Grenze für den die Heizvorrichtung durchfließenden Strom und/oder bei Überschreiten einer definierten maximalen Betriebszeit der Heizvorrichtung ein Signal zum Abschalten der Heizvorrichtung erzeugt. Der Strombedarf der Heizvorrichtung wird damit insgesamt begrenzt. Gleichzeitig ist sichergestellt, dass nicht unnötig geheizt wird, wenn die Kraftstoffanlage bereits ausreichend warm ist.

Die oben erwähnte Verzögerungszeit wird zusätzlich in Abhängigkeit von dem die Heizvorrichtung durchfließenden Strom und/oder in Abhängigkeit von der Spannung einer Fahrzeugbatterie ermittelt. Damit fließen in die Berechnung der Verzögerungszeit auch Größen ein, aus denen die momentane Heizleistung der elektrischen Heizvorrichtung abgeleitet werden kann.

Der Ablauf der Verzögerungszeit wird durch einen Signalgeber, beispielsweise durch eine Lampe angezeigt. Damit wird der Bedienperson mitgeteilt, dass der Verbrennungsmotor nun durch Betätigen des Anlassers gestartet werden kann.

In Abhängigkeit von dem Heizbedarf der Kraftstoffanlage und/oder in Abhängigkeit von der Spannung der Fahrzeugbatterie und/oder in Abhängigkeit von dem die Heizvorrichtung durchfließenden Strom wird eine Taktzeit und/oder eine Taktfrequenz für ein ein- oder mehrmaliges Öffnen des Absperrventils ermittelt. Insbesondere bei einem Kaltstart des Verbrennungsmotors wird das Absperrventil zunächst nur kurz für die Dauer der Taktzeit geöffnet, so dass nur eine begrenzte Menge Treibgas in den Verdampfer eingelassen wird. Bei einem Warmstart des Verbrennungsmotors kann die Taktzeit auf null gesetzt werden, was dann ein andauemdes Öffnen des Absperrventils bewirkt.

Das Absperrventil wird wieder geöffnet, wenn nach Ablauf der Taktzeit die Drehzahl des Verbrennungsmotors die Drehzahl des Anlassers überschreitet. Erst wenn der Verbrennungsmotor von selbst läuft, wird also dauerhaft Treibgas zugeführt.

Das Absperrventil bleibt geöffnet, wenn nach einer Wartezeit die Drehzahl des Verbrennungsmotors eine definierte Startabwurfdrehzahl überschreitet. Die Startabwurfdrehzahl wird beispielweise dann nicht erreicht, wenn der Verbrennungsmotor nicht auf allen Zylindern läuft. In diesem Fall wird das Absperrventil wieder geschlossen, so dass der Startversuch abgebrochen wird.

Bei einem Ausschalten des Verbrennungsmotors soll verhindert werden, dass in den dem Absperrventil nachgeschalteten Teilen der Kraftstoffanlage Treibgas zurückbleibt. Dies wird durch eine Gasmangelabstellung erreicht, wobei bei einem Ausschalten des laufenden Verbrennungsmotors ein Signal zum Schließen des Absperrventils erzeugt wird, die Nachlaufzeit des Verbrennungsmotors nach dem Schließen des Absperrventils erfasst wird und ein Fehlersignal erzeugt wird, wenn die Nachlaufzeit eine vorgegebene Grenze überschreitet. Auf diese Weise kann die Funktionsfähigkeit des Absperrventils überprüft werden, da eine zu lange Nachlaufzeit auf ein klemmendes Absperrventil hindeutet. Falls ein Fehlersignal erzeugt wird, kann, gegebenenfalls zusätzlich in Abhängigkeit von einem Temperaturwert, ein Wiederstart des Verbrennungsmotors verhindert werden.

Weitere Vorteile und Einzelheiten der Erfindung werden anhand des in den schematischen Figuren dargestellten Ausführungsbeispiels näher erläutert. Dabei zeigt
- Figur 1: eine Kraftstoffanlage für einen LPG-Motor,
- Figur 2: ein Schaubild des erfindungsgemäßen Verfahrens zum Betreiben der Kraftstoffanlage.

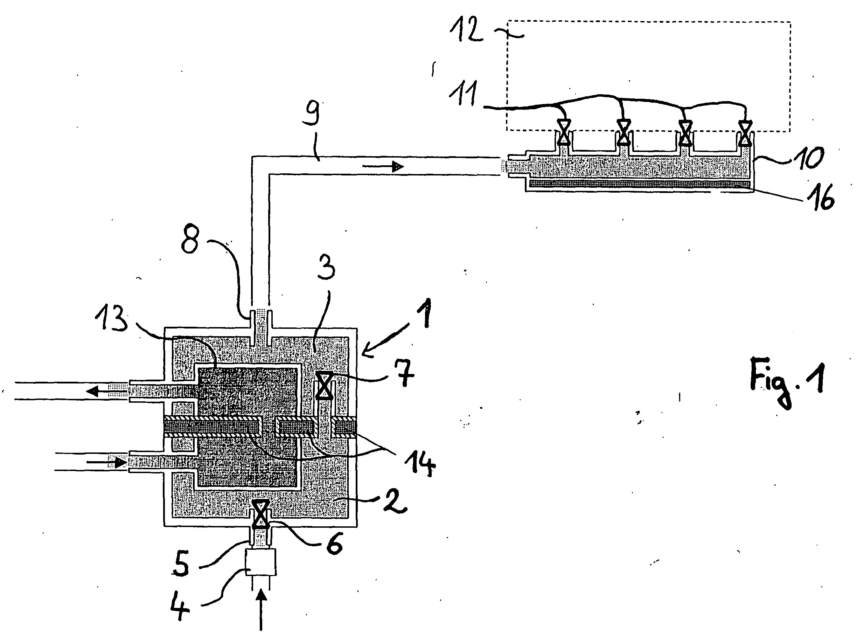

Figur 1 zeigt eine Kraftstoffanlage für einen mit Flüssiggas (LPG) betriebenen Verbrennungsmotor. Ein Verdampfer 1 weist eine erste Verdampferkammer 2 und eine zweite Verdampferkammer 3 auf. Ein nicht dargestellter Druckbehälter für das Treibgas ist über ein elektrisch ansteuerbares Absperrventil 4 an einen Eingang 5 des Verdampfers 1 angeschlossen. Im Bereich des Eingangs 5 befindet sich ein erstes Ventil 6, an dem das Treibgas entspannt wird und dabei zumindest teilweise die gasförmige Phase übergeht. Über ein zweites Ventil 7 gelangt das Treibgas in die zweite Verdampferkammer 3 und geht dabei annähernd vollständig in die gasförmige Phase über. Ein an der zweiten Verdampferkammer 3 angeordneter Ausgang 8 verbindet den Verdampfer 1 über eine Leitung 9 mit einer Sammeleinspritzleitung 10. An der Sammeleinspritzleitung 10 sind Ventile 11 angeordnet, über welche das Treibgas direkt oder indirekt über einen Luftansaugkanal in die Brennräume eines Verbrennungsmotors 12 eingespritzt wird.

Während des Verdampfens nimmt das Treibgas aus seiner Umgebung Wärmeenergie auf, die dem Verdampfer 1 mittels einer ersten Heizvorrichtung 13 und einer zweiten Heizvorrichtung 14 zugeführt wird. Die erste Heizvorrichtung 13 ist an einen Kühlkreislauf des Verbrennungsmotors 12 gekoppelt. Die zweite Heizvorrichtung 14 wird mit elektrischer Energie beheizt, kann also unabhängig von dem Zustand des Verbrennungsmotors 12 betrieben werden. Von der zweiten Heizvorrichtung 14 wird Wärme mittels eines PTC-Heizelements erzeugt, dessen Temperatur sich selbständig auf einen voreingestellten Wert regelt. Eine dritte Heizvorrichtung 16 dient zum Erwärmen der Sammeleinspritzleitung 10 und ist ebenfalls mit einem PTC-Heizelement ausgerüstet.

Mit den beiden elektrisch betriebenen Heizvorrichtungen 14, 16 kann sichergestellt werden, dass das Treibgas auch bei kalter Umgebungstemperatur und bei kaltem Verbrennungsmotor im Verdampfer 1 weitgehend verdampft und nicht rückkondensiert.

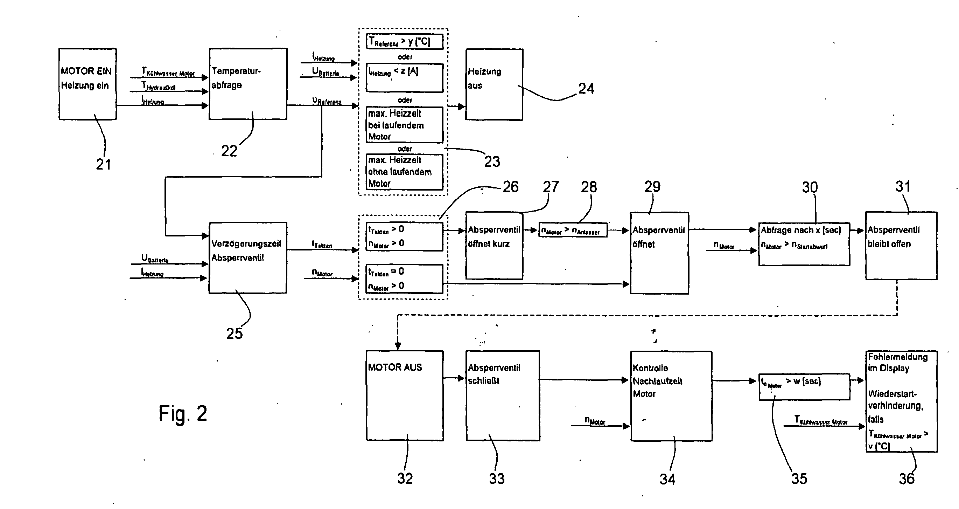

Anhand Figur 2 ist im Folgenden das erfindungsgemäße Verfahren zum Betreiben der Kraftstoffanlage beschrieben, mit dem sichergestellt wird, dass sich auch während eines Anlassens des Verbrennungsmotors kein oder nur wenig flüssiges Treibgas in der Kraftstoffanlage ansammelt.

Zum Zeitpunkt 21 gibt die Bedienperson das Signal, den Verbrennungsmotor einzuschalten. Dies erfolgt beispielsweise durch Drehen eines Zündschlüssels oder durch Drücken einer Starttaste. Automatisch wird zu diesem Zeitpunkt 1 auch die elektrisch betriebene Heizvorrichtung (Fig. 1, Pos. 14, 16) der Kraftstoffanlage eingeschaltet. Um den für die elektrische Heizvorrichtung (Fig. 1, Pos. 14, 16) bestehenden Heizbedarf υ_{Referenz} zu ermitteln, wird einem Rechenglied 22 der momentan die Heizvorrichtung (Fig. 1, Pos. 14, 16) durchfließende elektrische Strom l_{Heizung} mitgeteilt, wobei l_{Heizung} sich aus den Strömen durch die erste und die zweite Heizvorrichtung (14 und 16) zusammensetzt. Weitere Eingangsgrößen für die Ermittlung des Heizbedarfs υ_{Referenz} sind die aktuelle Kühlwassertemperatur T_{Kühlwasser Motor} des Verbrennungsmotors und/oder die aktuelle Hydrauliköltemperatur T_{Hydrauliköl} einer Hydraulikanlage und/oder eines zusätzlichen Temperatursensors.

Sobald eine der Bedingungen 23 erfüllt ist, wird die Heizvorrichtung (Fig. 1, Pos. 14, 16) zum Zeitpunkt 24 wieder abgeschaltet. Dies geschieht, wenn ein von dem Heizbedarf υ_{Referenz} abgeleiteter errechneter Temperaturwert des Verdampfers T_{Referenz} größer ist, als eine Grenze y, die dem errechneten Temperaturwert des Heizelements (Fig. 1, Pos. 14, 16) selbst entspricht. Ebenso erfolgt eine automatische Abschaltung der Heizvorrichtung (Fig. 1, Pos. 14, 16), wenn der Strom l_{Heizung} eine vorgegebene Grenze von z Ampere unterschreitet. Der Wert z kann dabei fest voreingestellt, oder als beispielsweise von der Batteriespannung abhängige Variable definiert sein. Eine Abschaltung der Heizung erfolgt ebenfalls, wenn eine maximale Heizzeit bei laufendem Motor oder eine maximale Heizzeit bei stillstehendem Motor überschritten wird.

In Abhängigkeit von dem bestehenden Heizbedarf υ_{Referenz} wird in dem Rechenglied 25 eine Verzögerungszeit für das Öffnen des Absperrventils (Fig. 1, Pos. 4) berechnet. Weitere Eingangsgrößen für die Berechnung der Verzögerungszeit sind die Batteriespannung U_{Batterie} der Fahrzeugbatterie und der Strom I_{Heizung}. Die Verzögerungszeit entspricht damit der Vorheizzeit der Kraftstoffanlage mittels des elektrischen Heizelements, bis der Verbrennungsmotor gestartet werden kann. Weiter wird in dem Rechenglied 25 eine Taktzeit t_{Takten} ermittelt, die vorgibt, wie lange das Absperrventil (Fig. 1, Pos. 4) erstmalig geöffnet wird.

In dem folgenden Logikglied 26 wird nach Ablauf der Verzögerungszeit geprüft, ob die Drehzahl n_{Motor} des Verbrennungsmotors größer ist als Null, d.h., ob der Motor durch einen Anlasser angetrieben wird. Falls dies der Fall ist, wird in Abhängigkeit von dem Wert der Taktzeit t_{Taken} entschieden, ob das Absperrventil (Fig. 1, Pos. 4) nur kurz oder dauerhaft geöffnet wird. Im Fall t_{Takten} = 0, was einem Warmstart des Verbrennungsmotors entspricht, wird das Absperrventil (Fig. 1, Pos. 4) im Schritt 29 dauerhaft geöffnet. Im Fall t_{Takten} > 0, was einem Kaltstart des Verbrennungsmotors entspricht, wird das Absperrventil (Fig. 1, Pos. 4) im Schritt 27 nur kurz geöffnet. Anschließend wird im Glied 28 überprüft, ob die Motordrehzahl n_{Motor} größer ist als die Anlasserdrehzahl n_{Anlasser}, was bedeutet, dass der Motor angelaufen ist. In diesem Fall wird ebenfalls zum Schritt 29 übergegangen, das Absperrventil (Fig. 1, Pos. 4) wird also dauerhaft geöffnet.

Anschließend erfolgt im Schritt 30 eine weitere Abfrage, um festzustellen, ob der Verbrennungsmotor seine Leerlaufdrehzahl erreicht hat. Hierzu wird die aktuelle Motordrehzahl n_{Motor} mit einer definierten Startabwurfdrehzahl n_{Startabwurf} verglichen. Falls die Motordrehzahl n_{Motor} größer ist, bleibt das Absperrventil (Fig. 1, Pos. 4) gemäß Schritt 31 geöffnet.

In diesem Zustand bleibt die Kraftstoffanlage, bis die Bedienperson zum Zeitpunkt 32, beispielsweise durch Zurückdrehen des Zündschlüssels oder durch Drücken einer Stopptaste ein Signal zum Ausschalten des Verbrennungsmotors erzeugt. Es wird eine Gasmangelabstellung des Verbrennungsmotors eingeleitet, wobei mit dem Schritt 33 das Absperrventil (Fig. 1, Pos. 4) geschlossen wird. Anhand der Motordrehzahl n_{Motor} wird anschließend in dem Glied 34 die Nachlaufzeit t_{n Motor} des Verbrennungsmotors erfasst und im Schritt 35 mit einem definierten Grenzwert w verglichen. Falls die Nachlaufzeit t_{n Motor} größer ist als w, deutet dies darauf hin, dass das Absperrventil nicht vollständig geschlossen ist und damit unerwünschterweise Treibgas in den Verdampfer nachströmt. Falls dies der Fall ist, wird im Schritt 36 eine Fehlermeldung erzeugt und ein erneutes Einschalten des Verbrennungsmotors in Abhängigkeit von einer Referenztemperatur, z.B. T_{Kühlwasser Motor} verhindert, da das nachströmende Treibgas hinter dem Verdampfer rückkondensieren und damit ein unsicherer Betriebszustand entstehen könnte. Ein Starten des Verbrennungsmotors wird dann wieder ermöglicht, wenn T_{Kühlwasser Motor} den gespeicherten Vergleichswert v erreicht oder unterschreitet.

## Patentansprüche

1. Verfahren zum Betreiben einer Kraftstoffanlage für einen mit Treibgas betriebenen Verbrennungsmotor, wobei die Kraftstoffanlage mindestens ein elektrisch ansteuerbares Absperrventil (4) und mindestens eine elektrisch betreibbare Heizvorrichtung (14, 16) für das Treibgas aufweist, **gekennzeichnet durch** die folgenden Verfahrensschritte:
- bei einem Einschalten des Verbrennungsmotors wird ein Signal zum Einschalten der Heizvorrichtung (14, 16) erzeugt;
- bei dem Einschalten der Heizvorrichtung (14, 16) wird zumindest einmalig ein Heizbedarf (υ_{Rererenz}) der Kraftstoffanlage ermittelt;
- in Abhängigkeit von dem Heizbedarf (υ_{Referenz}) der Kraftstoffanlage wird eine Verzögerungszeit ermittelt, nach der das Absperrventil (4) nach dem Einschalten der Heizvorrichtung (14, 16) geöffnet wird.

2. Verfahren nach Anspruch 1, **dadurch gekennzeichnet, dass** der Heizbedarf (υ_{Referenz}) der Kraftstoffanlage in Abhängigkeit von einem gemessenen Temperaturwert (T_{Kühlwasser Motor}) des Verbrennungsmotors und/oder in Abhängigkeit von einem gemessenen von dem Verbrennungsmotor unabhängigen Temperaturwert (T_{Hydrauliköl}) und/oder in Abhängigkeit von dem die Heizvorrichtung (14, 16) durchfließenden Strom (I_{Heizung}) ermittelt wird.

3. Verfahren nach Anspruch 1 oder 2, **dadurch gekennzeichnet, dass** bei Überschreiten einer vorgegebenen Grenze (y) für die aktuelle Temperatur (T_{Referenz}) der Kraftstoffanlage, der aus dem Heizbedarf (υ_{Referenz}) der Kraftstoffanlage ermittelt wird, und/oder bei Unterschreiten einer vorgegebenen Grenze (z) für den die Heizvorrichtung (14, 16) durchfließenden Strom (I_{Heizung}) und/oder bei Überschreiten einer definierten maximalen Betriebszeit der Heizvorrichtung (14, 16) ein Signal zum Abschalten der Heizvorrichtung (14, 16) erzeugt wird.

4. Verfahren nach einem der Ansprüche 1 bis 3, **dadurch gekennzeichnet, dass** die Verzögerungszeit zusätzlich in Abhängigkeit von dem die Heizvorrichtung (14, 16) durchfließenden Strom (I_{Heizung}) und/oder in Abhängigkeit von der Spannung (U_{Batterie}) einer Fahrzeugbatterie ermittelt wird.

5. Verfahren nach einem der Ansprüche 1 bis 4, **dadurch gekennzeichnet, dass** der Ablauf der Verzögerungszeit durch einen Signalgeber, beispielsweise durch eine Lampe angezeigt wird.

6. Verfahren nach einem der Ansprüche 1 bis 5, **dadurch gekennzeichnet, dass** in Abhängigkeit von dem Heizbedarf (υ_{Referenz}) der Kraftstoffanlage und/oder in Abhängigkeit von der Spannung (U_{Batterie}) der Fahrzeugbatterie und/oder in Abhängigkeit von dem die Heizvorrichtung (14, 16) durchfließenden Strom (I_{Heizung}) eine Taktzeit (t_{Takten}) und/oder eine Taktfrequenz für das Öffnen des Absperrventils (4) ermittelt wird.

7. Verfahren nach Anspruch 6, **dadurch gekennzeichnet, dass** das Absperrventil (4) wieder geöffnet wird, wenn nach Ablauf der Taktzeit (t_{Takten}) die Drehzahl (n_{Motor}) des Verbrennungsmotors die Drehzahl (n_{Anlasser}) des Anlassers überschreitet.

8. Verfahren nach Anspruch 6 oder 7, **dadurch gekennzeichnet, dass** das Absperrventil (4) geöffnet bleibt, wenn nach einer Wartezeit die Drehzahl (n_{Motor}) des Verbrennungsmotors eine definierte Startabwurfdrehzahl (n_{startabwurf}) überschreitet.

9. Verfahren zum Betreiben einer Kraftstoffanlage für einen mit Treibgas betriebenen Verbrennungsmotor, wobei die Kraftstoffanlage mindestens ein elektrisch ansteuerbares Absperrventil (4) aufweist, **gekennzeichnet durch** die folgenden Verfahrensschritte:
- bei einem Ausschalten des laufenden Verbrennungsmotors wird ein Signal zum Schließen des Absperrventils (4) erzeugt;
- die Nachlaufzeit (tₙ Motor) des Verbrennungsmotors nach dem Schließen des Absperrventils (4) wird erfasst;
- ein Fehlersignal wird erzeugt, wenn die Nachlaufzeit (tₙ Motor) eine vorgegebene Grenze (w) überschreitet.

## Claims

1. Method for operating a fuel system for an internal combustion engine which is operated with a propellant gas, wherein the fuel system has at least one electrically actuable check valve (4) and at least one electrically operable heating device (14, 16) for the propellant gas, **characterized by** the following method steps:
- when the internal combustion engine is switched on, a signal for switching on the heating device (14, 16) is generated;
- when the heating device (14, 16) is switched on, a heating requirement (U_{reference}) of the fuel system is determined at least once; and,
- depending on the heating requirement (U_{reference}) of the fuel system, a delay time is determined, after which the check valve (4) is opened after the switching on of the heating device (14, 16).

2. Method according to Claim 1, **characterized in that** the heating requirement (U_{reference}) of the fuel system is determined as a function of a measured temperature value (T_{cooling water} engine) of the internal combustion engine and/or as a function of a measured temperature value (T_{hydraulic} oil) which is independent of the internal combustion engine and/or as a function of the current (I_{heating}) which flows through the heating device (14, 16).

3. Method according to Claim 1 or 2, **characterized in that**, when a predefined limit (y) for the current temperature (T_{reference}) of the fuel system, which is determined from the heating requirement (U_{reference}) of the fuel system, is exceeded and/or when a predefined limit (z) for the current (I_{heating}) which flows through the heating device (14, 16) is undershot and/or when a defined maximum operating time of the heating device (14, 16) is exceeded, a signal for switching off the heating device (14, 16) is generated.

4. Method according to one of Claims 1 to 3, **characterized in that** the delay time is additionally determined as a function of the current (I_{heating}) which flows through the heating device (14, 16) and/or as a function of the voltage (U_{battery}) of a vehicle battery.

5. Method according to one of Claims 1 to 4, **characterized in that** the expiry of the delay time is indicated by a signal generator, for example by a lamp.

6. Method according to one of Claims 1 to 5, **characterized in that** a clock time (t_{clockon}) and/or a clock frequency for the opening of the check valve (4) are/is determined as a function of the heating requirement (U_{reference}) of the fuel system and/or as a function of the voltage (U_{battery}) of the vehicle battery and/or as a function of the current (I_{heating}) which flows through the heating device (14, 16).

7. Method according to Claim 6, **characterized in that** the check valve (4) is opened again if, after the expiry of the clock time (t_{clockon}) the rotational speed (n_{engine}) of the internal combustion engine exceeds the rotational speed (nₛₜₐᵣₜₑᵣ) , of the starter.

8. Method according to Claim 6 or 7, **characterized in that** the check valve (4) remains opened if a defined start abort rotational speed (n_{startabort}) exceeds the rotational speed (n_{engine}) of the internal combustion engine after a waiting time.

9. Method for operating a fuel system for an internal combustion engine which is operated with a propellant gas, wherein the fuel system has at least one electrically actuable check valve (4), **characterized by** the following method steps:
- when the running internal combustion engine is switched off, a signal for closing the check valve (4) is generated;
- the run-on time (tₙ engine) of the internal combustion engine is sensed after the closing of the check valve (4); and
- a fault signal is generated if the run-on time (tn engine) exceeds a predefined limit (w).

## Revendications

1. Procédé de conduite d'une installation de carburant pour moteur à combustion interne alimenté en carburant gazeux, l'installation de carburant présentant au moins une vanne de blocage (4) commandée électriquement et au moins un dispositif (14, 16) alimenté électriquement de chauffage du carburant gazeux,
le procédé étant **caractérisé par** les étapes suivantes :
- lors du branchement du moteur à combustion interne, un signal de branchement du dispositif de chauffage (14, 16) est formé,
- lors du branchement du dispositif de chauffage (14, 16), les besoins thermiques (υ_{référence}) de l'installation de carburant sont déterminés au moins une fois,
- une temporisation après laquelle la vanne de blocage (4) est ouverte après le branchement du dispositif de chauffage (14, 16) est déterminée en fonction des besoins thermiques (υ_{référence}) de l'installation de carburant.

2. Procédé selon la revendication 1, **caractérisé en ce que** les besoins thermiques (υ_{référence}) de l'installation de carburant sont déterminés en fonction d'une valeur mesurée de la température (T_{eau de} refroidissement moteur) du moteur à combustion interne, en fonction d'une valeur mesurée de température (T_{huile hydraulique}) indépendamment du moteur à combustion interne et/ou en fonction du courant (I_{chauffage}) qui traverse le dispositif de chauffage (14, 16).

3. Procédé selon les revendications 1 ou 2, **caractérisé en ce qu'**en cas de dépassement d'une limite prédéterminée (y) de la température effective (T_{référence}) de l'installation de combustible qui est déterminée à partir des besoins thermiques (υ_{référence}) de l'installation de carburant, un signal de débranchement du dispositif de chauffage (14, 16) est formé si une limite prédéterminée (z) du courant (I_{chauffage}) qui traverse le dispositif de chauffage (14, 16) n'est pas atteinte et/ou si une durée maximale définie de fonctionnement du dispositif de chauffage (14, 16) est dépassée.

4. Procédé selon l'une des revendications 1 à 3, **caractérisé en ce que** la durée de temporisation est déterminée de plus en fonction du courant (I_{chauffage}) qui traverse le dispositif de chauffage (14, 16) et/ou en fonction de la tension (U_{batterie}) de la batterie du véhicule.

5. Procédé selon l'une des revendications 1 à 4, **caractérisé en ce que** l'écoulement de la durée de temporisation est affiché par un signaleur, par exemple par une lampe.

6. Procédé selon l'une des revendications 1 à 5, **caractérisé en ce qu'**une durée de cadence (t_{cadence}) et/ou une fréquence de cadençage de l'ouverture de la vanne de blocage (4) sont déterminées en fonction des besoins en chaleur (υ_{référence}) de l'installation de carburant, en fonction de la tension (U_{batterie}) de la batterie du véhicule et/ou en fonction du courant (I_{chauffage}) qui traverse le dispositif de chauffage (14, 16).

7. Procédé selon la revendication 6, **caractérisé en ce que** la vanne de blocage (4) est rouverte si la vitesse de rotation (nₘₒₜₑᵤᵣ) du moteur à combustion interne dépasse la vitesse de rotation (n_{démarreur}) du démarreur après l'écoulement de la durée de cadence (t_{cadence}).

8. Procédé selon les revendications 6 ou 7, **caractérisé en ce que** la vanne de blocage (4) reste ouverte si la vitesse de rotation (nₘₒₜₑᵤᵣ) du moteur à combustion interne dépasse une vitesse définie (n_{libération} démarreur) de libération du démarreur après un temps d'attente.

9. Procédé de conduite d'une installation de carburant pour moteur à combustion interne alimenté en carburant gazeux, l'installation de combustible présentant au moins une vanne de blocage (4) commandée électriquement, le procédé étant **caractérisé par** les étapes suivantes :
- en cas de débranchement du moteur à combustion interne, un signal de fermeture de la vanne de blocage (4) est formé,
- la durée (tₙ moteur) de poursuite de la rotation du moteur à combustion interne après la fermeture de la vanne de blocage (4) est détectée et
- un signal d'erreur est formé si la durée (t_{n moteur}) de poursuite de la rotation dépasse une valeur prédéterminée (w).
